(19) Europäisches Patentamt
European Patent Office
Office européen des brevets

(11) **EP 4 645 783 A1**

(12) **EUROPEAN PATENT APPLICATION**
published in accordance with Art. 153(4) EPC

(43) Date of publication:
**05.11.2025 Bulletin 2025/45**

(21) Application number: **24806225.9**

(22) Date of filing: **07.04.2024**

(51) International Patent Classification (IPC):
**H04L 27/04** (2006.01)

(86) International application number:
**PCT/CN2024/086466**

(87) International publication number:
**WO 2024/234866 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.05.2023 CN 202310541288**

(71) Applicant: **ZTE Corporation
Shenzhen, Guangdong 518057 (CN)**

(72) Inventors:
• **LIU, Kun**
  **Shenzhen, Guangdong 518057 (CN)**
• **DAI, Bo**
  **Shenzhen, Guangdong 518057 (CN)**
• **YANG, Weiwei**
  **Shenzhen, Guangdong 518057 (CN)**
• **HU, Youjun**
  **Shenzhen, Guangdong 518057 (CN)**
• **CHEN, Mengzhu**
  **Shenzhen, Guangdong 518057 (CN)**
• **XU, Jun**
  **Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **COMMUNICATION METHOD AND APPARATUS, AND STORAGE MEDIUM**

(57) Provided are a communication method and apparatus, and a storage medium. The communication method comprises: determining a second data sequence according to a first data sequence, wherein the number of elements comprised in the first data sequence is the same as the number of elements comprised in the second data sequence.

> S301: A SIGNAL SENDING END DETERMINES A SECOND DATA SEQUENCE ACCORDING TO A FIRST DATA SEQUENCE

FIG. 3

EP 4 645 783 A1

**Description**

The present disclosure claims a priority to Chinese Patent Application No. 202310541288.2, and filed on May 12, 2023, the entire content of which is incorporated into the present application by reference.

TECHNICAL FIELD

Embodiments of the present disclosure relate to the field of communication technologies, and in particular, to a communication method and apparatus, and a storage medium.

BACKGROUND

In order to extend the battery life, in the 3rd generation partnership project (3GPP) Rel-18, it is considered to introduce an ultra-low power-consumption wake-up (low power wake up, LP-WUS) mechanism, that is, a terminal device uses a separate receiver to receive or detect a low power wake-up signal sent by a base station, and the terminal device that receives or detects a wake-up signal wakes up a main radio device (Main Radio) or turns on the Main Radio, or turns the Main Radio into a working state, and then transmits and receives data. When the terminal device does not receive or detect the low power wake-up signal, the Main Radio is in a deep sleep state or in an off state. In this way, the power consumption of the terminal device may be further reduced.

SUMMARY

In an aspect, the embodiments of the present disclosure provide a communication method. The communication method includes: determining a second data sequence according to a first data sequence, where a number of elements included in the first data sequence is the same as a number of elements included in the second data sequence.

In another aspect, the embodiments of the present disclosure provide a communication method. The communication method includes: determining a fourth data sequence according to a first data sequence, where a number of elements included in the fourth data sequence is greater than a number of elements included in the first data sequence.

In yet another aspect, the embodiments of the present disclosure provide a communication apparatus. The communication apparatus includes: a determining unit, configured to determine a second data sequence according to a first data sequence, where a number of elements included in the first data sequence is the same as a number of elements included in the second data sequence.

In yet another aspect, the embodiments of the present disclosure provide a communication apparatus. The communication apparatus includes: a determining unit, configured to determine a fourth data sequence according to a first data sequence, where a number of elements included in the fourth data sequence is greater than a number of elements included in the first data sequence.

In yet another aspect, the embodiments of the present disclosure provide a communication node. The communication node may implement functions performed in various aspects mentioned above or possible designs, and the functions may be implemented by hardware.

In a design, the communication node may include: a processor and a communication interface, and the processor and the communication interface may be configured to support the communication node to implement functions involved in any one of designs of the above aspects.

In another design, the communication node may further include a memory, and the memory is configured to store computer-executed instructions and data necessary for the apparatus. When the apparatus is running, the processor executes the computer-executed instructions stored in the memory, so that the apparatus performs the communication method described in any one of designs of the above aspects.

In yet another aspect, the embodiments of the present disclosure provide a computer readable storage medium, the computer readable storage medium may be a readable non-volatile storage medium, the computer readable storage medium stores computer instructions or a program, and the computer instructions or the program, when executed on a computer, cause the computer to perform the communication method described in any one of designs of the above aspects.

In yet another aspect, the embodiments of the present disclosure provide a computer program product containing instructions, and the instructions, when executed on a computer, cause the computer to perform the communication method described in any one of designs of the above aspects.

BRIEF DESCRIPTION OF THE DRAWINGS

In order to illustrate technical solutions in the present disclosure more clearly, the drawings to be used in some embodiments of the present disclosure will be introduced briefly. Obviously, the drawings to be described below are merely drawings of some embodiments of the present disclosure, and those ordinary skilled in the art may also obtain other drawings according to these drawings.

FIG. 1 is a schematic diagram of a method for determining time domain data according to some embodiments.
FIG. 2 is a structural schematic diagram of a communication system according to some embodiments.
FIG. 3 is a schematic diagram of a communication method according to some embodiments.
FIG. 4 is a schematic diagram of another communication method according to some embodiments.
FIG. 5 is a schematic diagram of a method for determining time domain data according to some embodiments.
FIG. 6 is a schematic diagram of a communication method according to some embodiments.
FIG. 7 is a schematic diagram of another communication method according to some embodiments.
FIG. 8 is a structural schematic diagram of a communication apparatus according to some embodiments.
FIG. 9 is a structural schematic diagram of another communication apparatus according to some embodiments.

## DETAILED DESCRIPTION

The technical solutions in the embodiments of the present disclosure will be described clearly and completely below with reference to the drawings in the embodiments of the present disclosure.

In the description of the present disclosure, unless otherwise specified, the symbol "/" means "or", and for example, "A/B" may mean A or B. Herein, "and/or" merely describes an association relationship of associated objects, and means that there may be three kinds of relationships, and for example, A and/or B may mean: only A, only B, and both A and B. In addition, "at least one" means one or more, and "plurality of / multiple" means two or more. Expressions, such as "first" and "second", etc., do not limit the number and execution order, and the expressions, such as "first" and "second", etc., also do not necessarily limit different items. "At least one of items" or similar expressions thereof refer to any combination of these items, including a single one (item) or any combination of plural ones (items). For example, at least one of a, b, or c may mean: a, b, c, a and b, a and c, b and c, or all of a and b and c, where a, b and c may be single or multiple.

It should be noted that in the present disclosure, the expressions such as "exemplary/exemplarily" or "for example" are used to present an example, illustration, or explanation. Any embodiment or design solution described with "exemplary/exemplarily" or "for example" in the present disclosure should not be construed as preferred or advantageous over other embodiments or design solutions. Rather, the use of the expressions such as "exemplary/exemplarily" or "for example", etc., is intended to present relevant concepts in a detailed manner.

In the embodiments of the present disclosure, "indication" or its variants may include a direct indication and an indirect indication. For example, by taking an example of indication information in the following, the indication information may directly carry information A itself or its index, to achieve a purpose of directly indicating the information A. Alternatively, the indication information may also carry information B having an associated relationship with the information A, thereby achieving a purpose of indirectly indicating the information A while indicating the information B.

For the 5th generation (5G) communication system, in addition to delay, reliability and availability, the energy efficiency of the terminal device is also crucial. Currently, the 5G device may need to be charged weekly or daily depending on individual usage time. Typically, the 5G device consumes tens of milliwatts of power in a radio resource control (RRC) idle state/inactive state, and consumes hundreds of milliwatts of power in an RRC connected state. Therefore, extending the battery life is a necessity condition for improving the energy efficiency and improving the user experience.

The power consumption of the terminal device depends on a length of a configured wake-up cycle, such as a paging cycle. To satisfy battery life requirements, the extended discontinuous reception (eDRX) mode cycle with high value may be used. However, this mode may result in high delay and thus, is not suitable for services that have requirements for both the battery life and low delay. Therefore, in 3GPP Rel-18, it is considered to introduce a low power wake-up signal mechanism.

The waveform of LP-WUS may be generated by using an on-off keying (OOK) modulation mode.

In a case where the waveform of LP-WUS is generated by using the OOK modulation mode, since an OOK symbol occupies multiple subcarriers in the frequency domain during generation, it is also referred to as an MC-OOK symbol, and LP-WUS may be referred to as an MC-OOK based LP-WUS.

Based on the MC-OOK modulation mode, M consecutive MC-OOK based LP-WUSs may be generated at one time. M is a positive integer.

For example, a data sequence $S_M = [s_0, s_1, s_2, s_3 ..., s_{M-1}]$ sent on M OOK symbols is taken as an example. Based on a preset formula, the $S_M$ is converted, to obtain a data sequence $Q_K$. The length of $Q_K$ is K. K is a positive integer.

The preset formula may be an equation as follows.

$$Q_K = [\underbrace{s_0, s_0, \cdots, s_0}_{A}, \underbrace{s_1, s_1, \cdots, s_1}_{A}, \ldots, \underbrace{s_{M-1}, s_{M-1}, \cdots, s_{M-1}}_{A}].$$

A is a positive integer.

Alternatively, the preset formula may be an equation as follows.

$$Q_K = [\underbrace{w_0^0 \cdot s_0, w_0^1 \cdot s_0, \cdots, w_0^{A_0-1} \cdot s_0}_{A_0}, \underbrace{w_1^0 \cdot s_1, w_1^1 \cdot s_1, \cdots, w_1^{A_1-1} \cdot s_1}_{A_1}, \ldots, \underbrace{w_{M-1}^0 \cdot s_{M-1}, w_{M-1}^1 \cdot s_{M-1}, \cdots, w_{M-1}^{A_{M-1}} s_{M-1}}_{A_{M-1}}].$$

In the above formula, $A_0 + A_1 + \cdots + A_i \cdots + A_{M-1} = K$, $0 \le i \le M-1$. $w_0^0$ to $w_i^{A_i-1}$ are coefficients. Sizes of $w_0^0$ to $w_i^{A_i-1}$ may be set as needed, which are not limited thereto.

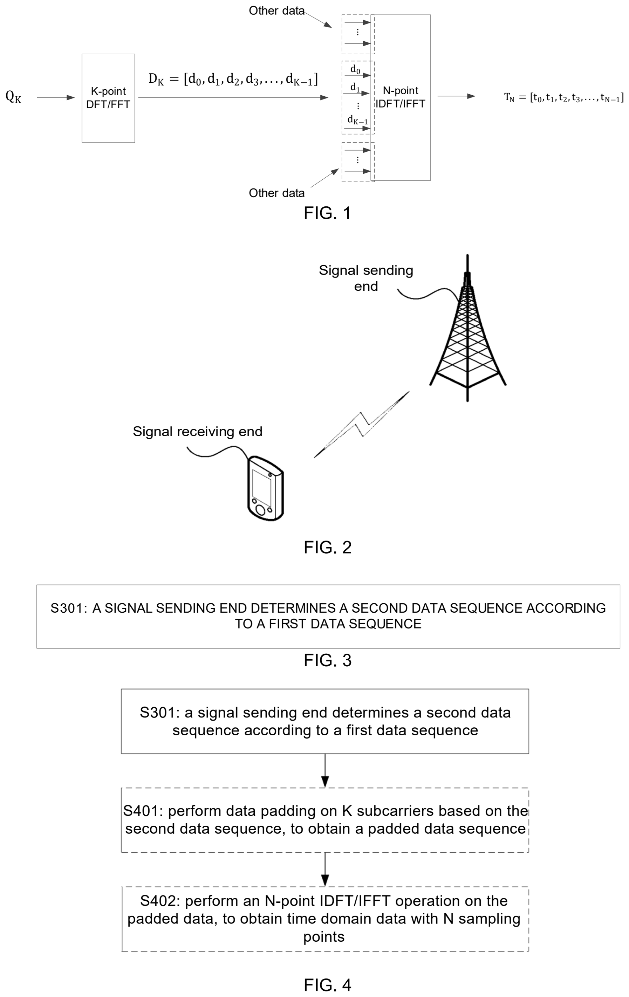

As shown in FIG. 1, a K-point discrete Fourier transform (discrete fourier transform, DFT)/fast Fourier transform (fast fourier transform, FFT) operation is performed on the data sequence $Q_K$, to obtain a data sequence $D_K = [d_0, d_1, d_2, d_3, \ldots, d_{K-1}]$, and the data sequence $D_K$ is padded onto K subcarriers corresponding to the LP-WUS in the frequency domain.

When a bandwidth of the frequency domain includes N subcarriers, an N-point inverse discrete Fourier transform (inverse discrete fourier transform, IDFT)/inverse fast Fourier transform (inverse fast fourier transform, IFFT) operation may be performed on the padded data on the N subcarriers, to obtain time domain data $T_N = [t_0, t_1, t_2, t_3, \ldots, t_{N-1}]$ of N sampling points.

In the above formula, $T_N = [t_0, t_1, t_2, t_3, \ldots t_{n-1}]$ is sampling data of M OOK time domain symbols. $[t_0, t_1, t_2, t_3, \ldots, t_{N/M-1}]$ is sampling point data of a first OOK time domain symbol among the M OOK time domain symbols, $[t_{N/M}, t_{N/M+1}, \ldots, t_{2N/M-1}]$ is sampling point data of a second OOK time domain symbol among the M OOK time domain symbols, and so on, $[t_{(M-1)N/M}, t_{(M-1)N/M+1}, \ldots, t_{N-1}]$ is sampling point data of an M-th OOK time domain symbol among the M OOK time domain symbols.

In the embodiments of the present disclosure, before sending the time domain data $T_N$ with the N sampling points mentioned above, it is necessary to perform an operation of adding a CP (cyclic prefix) on the $T_N$, to obtain time domain data with (N+Ncp) sampling points, and then the time domain data with the (N+Ncp) sampling points may be sent.

The operation of adding a CP refers to padding last Ncp elements in the data $T_N$ into a starting position of the data $T_N$ by cyclic shift, to obtain data $T_{N+Ncp} = \{d_{N-NCP}, d_{N-NCP+1}, \cdots, d_{N-1}, d_0, d_1, d_2, \ldots, d_{N-1}\}$ with a length of N+Ncp.

In the above process of generating the M MC-OOK based LP-WUS, the K-point DFT/FFT operation and the N-point IDFT/IFFT operation need to be performed, which increases the operation complexity of the signal sending end.

In view of this, the embodiments of the present disclosure provide an information transmission method for reducing the operation complexity of the signal sending end. In the method, the signal sending end may determine a second data sequence or a fourth data sequence according to a first data sequence. A number of elements included in the second data sequence is the same as a number of elements included in the first data sequence. A number of elements included in the fourth data sequence is greater than a number of elements included in the first data sequence. That is, in the embodiments of the present disclosure, the second data sequence may be determined according to the first data sequence, which reduces the operations that need to be performed, thereby reducing the operation complexity of the signal sending end when generating the LP-WUS.

In addition, the method provided by the embodiments of the present disclosure does not require additional hardware/software, and therefore does not require additional costs. At the same time, since no additional hardware/software is required, it may be sent simultaneously with other communication signals (such as 5G signals).

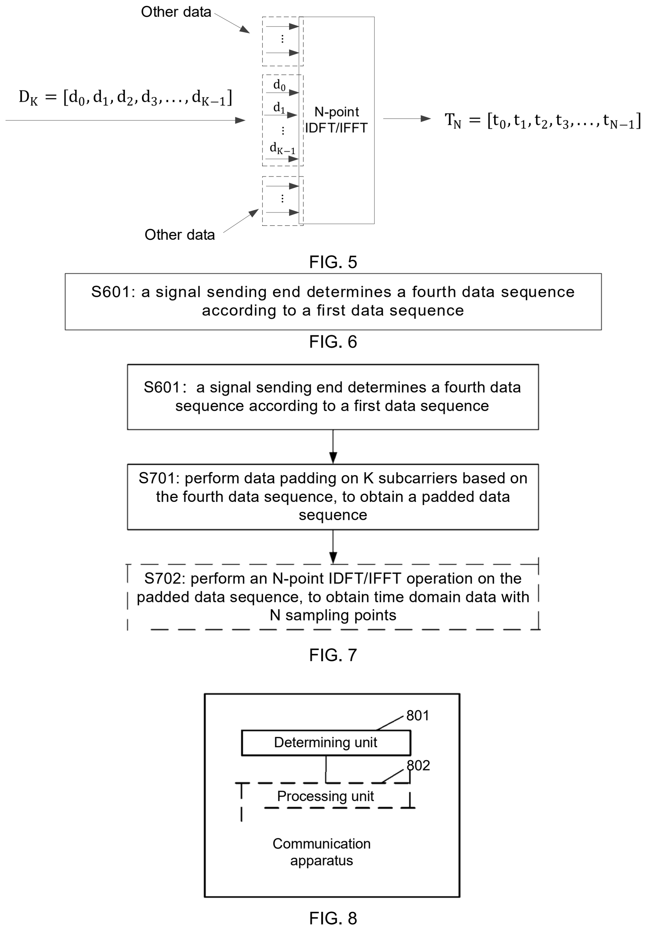

In a case where the signal sending end does not support scrambling, the signal sending end may determine the second data sequence according to the first data sequence. For example, reference may be made to the embodiments shown in FIG. 3 described below. In a case where the signal sending end supports scrambling, the signal sending end may determine a third data sequence according to the first data sequence. For example, reference may be made to the embodiments shown in FIG. 6 described below.

It should be noted that, the technical solutions provided in the embodiments of the present disclosure may be applied to various communication systems, for example, the 6G communication system, a future evolutional system, or a multi-communication fusion system, etc.

Exemplarily, FIG. 2 shows a structural schematic diagram of a communication system, provided in the embodiments of the present disclosure. The communication system may include a signal sending end and a signal receiving end. The signal sending end may be communicatively connected with the signal receiving end. For example, the signal sending end may be communicatively connected with the signal receiving end by a radio channel.

The signal sending end may be a network device, or the signal sending end may also be a terminal. The signal receiving end may be a terminal, or the signal receiving end may also be a network device.

The network device may be used to implement functions, such as resource scheduling, radio resource management, and radio access control, etc., of terminals. For example, the network device may be any one of a small base station, a radio access point, a receiving-sending point or a group of receiving-sending points (Transmission Receive Point, TRP), a transmission point (Transmission Point, TP), and some other access nodes.

The terminal may also be referred to as a terminal device, a user equipment (User Equipment, UE), a mobile station, a mobile terminal, etc. The terminal device may be a mobile phone, a tablet computer, a computer with a radio transceiver function, a virtual reality terminal device, an augmented reality terminal device, a wireless terminal in industrial control, a wireless terminal in unmanned driving, a wireless terminal in remote surgery, a wireless terminal in transportation safety, a wireless terminal in a smart city, a wireless terminal in a smart home, etc. The embodiments of the present disclosure do not limit the device form adopted by the terminal device.

It should be noted that, FIG. 2 is only exemplary, and a number of devices and names of the various devices included in FIG. 2 are not limited, and in addition to the devices shown in FIG. 2, the communication system may also include other devices, such as a core network device.

The embodiments of the present disclosure do not limit the application scenarios. The system architectures and the service scenarios described in the embodiments of the present disclosure are provided for more clearly explaining the technical solutions of the embodiments of the present disclosure, and do not constitute a limitation on the technical solutions provided in the embodiments of the present disclosure, and the ordinary skilled in the art may know that with the evolution of the network architectures and the emergence of new service scenarios, the technical solutions provided in the embodiments of the present disclosure are also applicable to similar technical problems.

The communication method provided in the embodiments of the present disclosure is described below in conjunction with the communication system shown in FIG. 2. The actions, terms, etc., involved between the various embodiments of the present disclosure may refer to each other, which are not limited thereto.

FIG. 3 is a communication method according to some embodiments. As shown in FIG. 3, the method may include S301.

S301, a signal sending end determines a second data sequence according to a first data sequence.

The first data sequence may be the above data sequence $S_M$. The first data sequence may also be referred to as first data information or a first data signal or other names, which is not limited thereto.

In some application scenarios, the signal sending end, after acquiring the first data sequence, may obtain an LP-WUS based on the first data sequence. For example, reference may be made to the subsequent descriptions.

In the embodiments of the present disclosure, the second data sequence may be $F_M = [f_0, f_1, f_2, f_3 \ldots, f_{M-1}]$. M is the number of elements included in the second data sequence, and M is a positive integer.

In the embodiments of the present disclosure, the first data sequence may carry one-bit information or multi-bit information.

In an example, in a case where the first data sequence carries one-bit information, the first data sequence is used to indicate one-bit information (e.g., 1, 0).

For example, M=2, and elements in the first data sequence may be shown in Table 1.

Table 1

|   | 1 | 2 |
|---|---|---|
| 1 | 0 | 1 |
| 2 | 1 | 0 |

In Table 1, 1 and 2 in the first row are index numbers of the elements in the first data sequence. 1 and 2 in the first column may be used to represent indexes of the first data sequence. Different indexes correspond to different first data sequences. In Table 1, the bit information carried by each row of data may be set as needed. For example, when the first data sequence is {0, 1}, the bit information carried by the first data sequence may be 1; when the first data sequence is {1, 0}, the bit information carried by the first data sequence may be 0.

For another example, when the first data sequence is {0, 1}, the bit information carried by the first data sequence may also be 0; when the first data sequence is {1, 0}, the bit information carried by the first data sequence may also be 1.

In another example, M=4, elements in the first data sequence may be shown in Table 2.

Table 2

|   | 1 | 2 | 3 | 4 |
|---|---|---|---|---|
| 1 | 0 | 1 | 0 | 1 |
| 2 | 1 | 0 | 1 | 0 |

In Table 2, 1 to 4 in the first row are index numbers of the elements in the first data sequence. 1 and 2 in the first column may be used to represent indexes of different first data sequences. Different indexes correspond to different first data sequences. In Table 2, the bit information carried by each row of data may be set as needed. For example, when the first data sequence is {0, 1, 0, 1}, the bit information carried by the first data sequence may be 1; when the first data sequence is {1, 0, 1, 0}, the bit information carried by the first data sequence may be 0.

For another example, when the first data sequence is {0, 1, 0, 1}, the bit information carried by the first data sequence may also be 0; when the first data sequence is {1, 0, 1, 0}, the bit information carried by the first data sequence may also be 1.

For another example, M=8, elements in the first data sequence may be shown in Table 3.

Table 3

|   | 1 | 2 | 3 | 4 | 5 | 6 | 7 | 8 |
|---|---|---|---|---|---|---|---|---|
| 1 | 0 | 1 | 0 | 1 | 0 | 1 | 0 | 1 |
| 2 | 1 | 0 | 1 | 0 | 1 | 0 | 1 | 0 |

In Table 3, 1 to 8 in the first row are index numbers of the elements in the first data sequence. 1 and 2 in the first column may be used to represent indexes of different first data sequences. Different indexes correspond to different first data sequences. In Table 3, the bit information carried by each row of data may be set as needed. For example, when the first data sequence is {0, 1, 0, 1, 0, 1, 0, 1}, the bit information carried by the first data sequence may be 1; when the first data sequence is {1, 0, 1, 0, 1, 0, 1, 0}, the bit information carried by the first data sequence may be 0.

For another example, when the first data sequence is {0, 1, 0, 1, 0, 1, 0, 1}, the bit information carried by the first data sequence may be 0; when the first data sequence is {1, 0, 1, 0, 1, 0, 1, 0}, the bit information carried by the first data sequence may be 1.

For another example, in a case where the first data sequence carries multi-bit information, one-bit information may correspond to multiple elements in the first data sequence.

For example, M=4, and the first data sequence carries 2-bit information (such as 00, 01, 10, 11). The elements in the first data sequence may be shown in Table 4.

Table 4

|   | 1 | 2 | 3 | 4 |
|---|---|---|---|---|
| 1 | 0 | 1 | 0 | 1 |
| 2 | 0 | 1 | 1 | 0 |
| 3 | 1 | 0 | 0 | 1 |
| 4 | 1 | 0 | 1 | 0 |

In Table 4, 1 to 4 in the first row are index numbers of the elements in the first data sequence. 1 to 4 in the first column may be used to represent indexes of different first data sequences. Different indexes correspond to different first data sequences. In

Table 4, the bit information carried by each row of data may be set as needed. For example, when the first data sequence is {0, 1, 0, 1}, the bit information carried by the first data sequence may be 00; when the first data sequence is {0, 1, 1, 0}, the bit information carried by the first data sequence may be 01; when the first data sequence is {1, 0, 0, 1}, the bit information carried by the first data sequence may be 10; when the first data sequence is {1, 0, 1, 0}, the bit information carried by the first data sequence may be 11.

For another example, when the first data sequence is {1, 0, 1, 0}, the bit information carried by the first data sequence may be 00; when the first data sequence is {1, 0, 0, 1}, the bit information carried by the first data sequence may be 01; when the first data sequence is {0, 1, 1, 0}, the bit information carried by the first data sequence may be 10; when the first data sequence is {0, 1, 0, 1}, the bit information carried by the first data sequence may be 11.

For example, M=8, and the first data sequence carries 2-bit information (such as 00, 01, 10, 11). The elements in the first data sequence may be shown in Table 5.

Table 5

|   | 1 | 2 | 3 | 4 | 5 | 6 | 7 | 8 |
|---|---|---|---|---|---|---|---|---|
| 1 | 0 | 1 | 0 | 1 | 0 | 1 | 0 | 1 |

(continued)

|   | 1 | 2 | 3 | 4 | 5 | 6 | 7 | 8 |
|---|---|---|---|---|---|---|---|---|
| 2 | 0 | 1 | 0 | 1 | 1 | 0 | 1 | 0 |
| 3 | 1 | 0 | 1 | 0 | 0 | 1 | 0 | 1 |
| 4 | 1 | 0 | 1 | 0 | 1 | 0 | 1 | 0 |

In Table 5, 1 to 8 in the first row are index numbers of the elements in the first data sequence. 1 to 4 in the first column may be used to represent indexes of different first data sequences. Different indexes correspond to different first data sequences. In Table 5, the bit information carried by each row of data may be set as needed. For example, when the first data sequence is {0, 1, 0, 1, 0, 1, 0, 1}, the bit information carried by the first data sequence may be 00; when the first data sequence is {0, 1, 0, 1, 1, 0, 1, 0}, the bit information carried by the first data sequence may be 01; when the first data sequence is {1, 0, 1, 0, 0, 1, 0, 1}, the bit information carried by the first data sequence may be 10; when the first data sequence is {1, 0, 1, 0, 1, 0, 1, 0}, the bit information carried by the first data sequence may be 11.

For another example, when the first data sequence is {1, 0, 1, 0, 1, 0, 1, 0}, the bit information carried by the first data sequence may be 00; when the first data sequence is {1, 0, 1, 0, 0, 1, 0, 1}, the bit information carried by the first data sequence may be 01; when the first data sequence is {0, 1, 0, 1, 1, 0, 1, 0}, the bit information carried by the first data sequence may be 10; when the first data sequence is {0, 1, 0, 1, 0, 1, 0, 1}, the bit information carried by the first data sequence may be 11.

For example, M=8, and the first data sequence carries 4-bit information (e.g., 0000, 0001, 0010, 0011, 0100, 0101, 0110, 0111, 1000, 1001, 1010, 1011, 1100, 1101, 1110, 1111). The first data sequence may be shown in Table 6.

Table 6

|    | 1 | 2 | 3 | 4 | 5 | 6 | 7 | 8 |
|----|---|---|---|---|---|---|---|---|
| 1  | 0 | 1 | 0 | 1 | 0 | 1 | 0 | 1 |
| 2  | 0 | 1 | 0 | 1 | 0 | 1 | 1 | 0 |
| 3  | 0 | 1 | 0 | 1 | 1 | 0 | 0 | 1 |
| 4  | 0 | 1 | 0 | 1 | 1 | 0 | 1 | 0 |
| 5  | 0 | 1 | 1 | 0 | 0 | 1 | 0 | 1 |
| 6  | 0 | 1 | 1 | 0 | 0 | 1 | 1 | 0 |
| 7  | 0 | 1 | 1 | 0 | 1 | 0 | 0 | 1 |
| 8  | 0 | 1 | 1 | 0 | 1 | 0 | 1 | 0 |
| 9  | 1 | 0 | 0 | 1 | 0 | 1 | 0 | 1 |
| 10 | 1 | 0 | 0 | 1 | 0 | 1 | 1 | 0 |
| 11 | 1 | 0 | 0 | 1 | 1 | 0 | 0 | 1 |
| 12 | 1 | 0 | 0 | 1 | 1 | 0 | 1 | 0 |
| 13 | 1 | 0 | 1 | 0 | 0 | 1 | 0 | 1 |
| 14 | 1 | 0 | 1 | 0 | 0 | 1 | 1 | 0 |
| 15 | 1 | 0 | 1 | 0 | 1 | 0 | 0 | 1 |
| 16 | 1 | 0 | 1 | 0 | 1 | 0 | 1 | 0 |

In Table 6, 1 to 8 in the first row are index numbers of the elements in the first data sequence. 1 to 16 in the first column may be used to represent indexes of different first data sequences. Different indexes correspond to different first data sequences. In Table 6, the bit information carried by each row of data may be set as needed. For example, the bit information carried by the first row of data may be 0000, the bit information carried by the second row of data may be 0001, the bit information carried by the third row of data may be 0010, the bit information carried by the fourth row of data may be 0011, the bit information carried by the fifth row of data may be 0100, the bit information carried by the sixth row of data may be 0101, the bit information carried by the seventh row of data may be 0110, the bit information carried by the eighth row of data may be 0111, the bit information carried by the ninth row of data may be 1000, the bit information carried by the tenth row of data may be 1001, the bit information carried by the eleventh row of data may be 1010, the bit information carried by the twelfth row of data may be 1011, the bit information carried by the thirteenth row of data may be 1100, the bit information carried by the fourteenth row of data may be 1101, the bit information carried by the fifteenth row of data may be 1110, and the bit information carried by the sixteenth row of data may be 1111.

For another example, the bit information carried by the first row of data may be 1111, the bit information carried by the second row of data may be 1110, the bit information carried by the third row of data may be 1101, the bit information carried by the fourth row of data may be 1100, the bit information carried by the fifth row of data may be 1011, the bit information carried by the sixth row of data may be 1010, the bit information carried by the seventh row of data may be 1001, the bit information carried by the eighth row of data may be 1000, the bit information carried by the ninth row of data may be 0111, the bit information carried by the tenth row of data may be 0110, the bit information carried by the eleventh row of data may be 0101, the bit information carried by the twelfth row of data may be 0100, the bit information carried by the thirteenth row of data may be 0011, the bit information carried by the fourteenth row of data may be 0010, the bit information carried by the fifteenth row of data may be 0001, and the bit information carried by the sixteenth row of data may be 0000.

In an implementation, the signal sending end may process the first data sequence according to a first mode, to obtain the second data sequence.

The first mode may include one of the following 1-1 to 1-5.

1-1, M-point DFT.

In an example, each element in the second data sequence may be determined by an element corresponding to the first data sequence. For example, $f_0$ may be determined by $S_0$.

**For** example, the element in the second data sequence is $f_k = \sum_{m=0}^{M-1} S_m e^{-j2\pi mk/M}$. In the above formula, $0 \leq k \leq M-1$.

Based on this mode, the signal sending end may perform the M-point DFT on the first data sequence to obtain the second data sequence, which is simple and convenient.

1-2, M-point FFT.

For the M-point FFT, reference may be made to the prior art, which will not be repeated herein.

Based on this mode, the signal sending end may perform the M-point FFT on the first data sequence to obtain the second data sequence, which is simple and convenient.

1-3, M-point IDFT.

For the M-point IDFT, reference may be made to the prior art, which will not be repeated herein.

Based on this mode, the signal sending end may perform the M-point IDFT on the first data sequence to obtain the second data sequence, which is simple and convenient.

1-4, M-point IFFT.

For the M-point IFFT, reference may be made to the prior art, which will not be repeated herein.

Based on this mode, the signal sending end may perform the M-point IFFT on the first data sequence to obtain the second data sequence, which is simple and convenient.

1-5, generating according to a first preset formula.

The first preset formula may be pre-configured by the signal sending end. Alternatively, the first preset formula may also be acquired by the signal sending end from other devices, for example, from a core network device. The first preset formula may convert the first data sequence into the second data sequence by a transformation matrix. The transformation matrix includes multiple rows and multiple columns, and a number of elements included in the row and a number of elements included in the column are the same as the number of elements in the first data sequence.

In an example, the first preset formula may be an equation as follows.

$$
\begin{bmatrix} f_0 \\ f_1 \\ \vdots \\ f_k \\ \vdots \\ f_{M-1} \end{bmatrix} = \begin{bmatrix} 1 & 1 & \cdots & 1 & \cdots & 1 \\ 1 & e^{-j2\pi/M} & \cdots & e^{-j2\pi m/M} & \cdots & e^{-j2\pi(M-1)/M} \\ \vdots & \vdots & \vdots & \vdots & \vdots & \vdots \\ 1 & e^{-j2\pi k/M} & \vdots & e^{-j2\pi km/M} & \vdots & e^{-j2\pi k(M-1)/M} \\ \vdots & \vdots & \vdots & \vdots & \vdots & \vdots \\ 1 & e^{-j2\pi(M-1)/M} & \vdots & e^{-j2\pi(M-1)m/M} & \vdots & e^{-j2\pi(M-1)(M-1)/M} \end{bmatrix} \begin{bmatrix} S_0 \\ S_1 \\ \vdots \\ S_m \\ \vdots \\ S_{M-1} \end{bmatrix}.
$$

In the above formula, m and k are both greater than or equal to 0 and less than or equal to M-1.

In another example, the first preset formula may be an equation as follows.

$$\begin{bmatrix} f_0 \\ f_1 \\ \vdots \\ f_k \\ \vdots \\ f_{M-1} \end{bmatrix} = \begin{bmatrix} 1 & 1 & \cdots & 1 & \cdots & 1 \\ 1 & e^{j2\pi/M} & \cdots & e^{j2\pi m/M} & \cdots & e^{j2\pi(M-1)/M} \\ \vdots & \vdots & \vdots & \vdots & & \vdots \\ 1 & e^{j2\pi k/M} & \vdots & e^{j2\pi km/M} & \vdots & e^{j2\pi k(M-1)/M} \\ \vdots & \vdots & \vdots & \vdots & & \vdots \\ 1 & e^{j2\pi(M-1)/M} & \vdots & e^{j2\pi(M-1)m/M} & \vdots & e^{j2\pi(M-1)(M-1)/M} \end{bmatrix} \begin{bmatrix} s_0 \\ s_1 \\ \vdots \\ s_m \\ \vdots \\ s_{M-1} \end{bmatrix}.$$

For example, when M=2, the first preset formula may be: $\begin{bmatrix} f_0 \\ f_1 \end{bmatrix} = \begin{bmatrix} 1 & 1 \\ 1 & e^{-j2\pi/2} \end{bmatrix} \begin{bmatrix} s_0 \\ s_1 \end{bmatrix}$.

Alternatively, the first preset formula may also be: $\begin{bmatrix} f_0 \\ f_1 \end{bmatrix} = \begin{bmatrix} 1 & 1 \\ 1 & e^{j2\pi/2} \end{bmatrix} \begin{bmatrix} s_0 \\ s_1 \end{bmatrix}$.

For another example, when M=4, the first preset formula may be an equation as follows.

$$\begin{bmatrix} f_0 \\ f_1 \\ f_2 \\ f_3 \end{bmatrix} = \begin{bmatrix} 1 & 1 & 1 & 1 \\ 1 & e^{-j*2\pi/4} & e^{-j*2\pi*2/4} & e^{-j*2\pi*3/4} \\ 1 & e^{-j*2\pi*2/4} & e^{-j*2\pi*2*2/4} & e^{-j*2\pi*2*3/4} \\ 1 & e^{-j*2\pi*3/4} & e^{-j*2\pi*3*2/4} & e^{-j*2\pi*3*3/4} \end{bmatrix} \begin{bmatrix} s_0 \\ s_1 \\ s_2 \\ s_3 \end{bmatrix}.$$

Alternatively, the first preset formula may also be an equation as follows.

$$\begin{bmatrix} f_0 \\ f_1 \\ f_2 \\ f_3 \end{bmatrix} = \begin{bmatrix} 1 & 1 & 1 & 1 \\ 1 & e^{j*2\pi/4} & e^{j*2\pi*2/4} & e^{j*2\pi*3/4} \\ 1 & e^{j*2\pi*2/4} & e^{j*2\pi*2*2/4} & e^{j*2\pi*2*3/4} \\ 1 & e^{j*2\pi*3/4} & e^{j*2\pi*3*2/4} & e^{j*2\pi*3*3/4} \end{bmatrix} \begin{bmatrix} s_0 \\ s_1 \\ s_2 \\ s_3 \end{bmatrix}.$$

For another example, when M=8, the first preset formula may be an equation as follows.

$$\begin{bmatrix} f_0 \\ f_1 \\ f_2 \\ f_3 \\ f_4 \\ f_5 \\ f_6 \\ f_7 \end{bmatrix} = \begin{bmatrix} 1 & 1 & 1 & 1 & 1 & 1 & 1 & 1 \\ 1 & e^{-j*2\pi/8} & e^{-j*2\pi*2/8} & e^{-j*2\pi*3/8} & e^{-j*2\pi*4/8} & e^{-j*2\pi*5/8} & e^{-j*2\pi*6/8} & e^{-j*2\pi*7/8} \\ 1 & e^{-j*2\pi*2/8} & e^{-j*2\pi*2*2/8} & e^{-j*2\pi*2*3/8} & e^{-j*2\pi*2*4/8} & e^{-j*2\pi*2*5/8} & e^{-j*2\pi*2*6/8} & e^{-j*2\pi*2*7/8} \\ 1 & e^{-j*2\pi*3/8} & e^{-j*2\pi*3*2/8} & e^{-j*2\pi*3*3/8} & e^{-j*2\pi*3*4/8} & e^{-j*2\pi*3*5/8} & e^{-j*2\pi*3*6/8} & e^{-j*2\pi*3*7/8} \\ 1 & e^{-j*2\pi*4/8} & e^{-j*2\pi*4*2/8} & e^{-j*2\pi*4*3/8} & e^{-j*2\pi*4*4/8} & e^{-j*2\pi*4*5/8} & e^{-j*2\pi*4*6/8} & e^{-j*2\pi*4*7/8} \\ 1 & e^{-j*2\pi*5/8} & e^{-j*2\pi*5*2/8} & e^{-j*2\pi*5*3/8} & e^{-j*2\pi*5*4/8} & e^{-j*2\pi*5*5/8} & e^{-j*2\pi*5*6/8} & e^{-j*2\pi*5*7/8} \\ 1 & e^{-j*2\pi*6/8} & e^{-j*2\pi*6*2/8} & e^{-j*2\pi*6*3/8} & e^{-j*2\pi*6*4/8} & e^{-j*2\pi*6*5/8} & e^{-j*2\pi*6*6/8} & e^{-j*2\pi*6*7/8} \\ 1 & e^{-j*2\pi*7/8} & e^{-j*2\pi*7*2/8} & e^{-j*2\pi*7*3/8} & e^{-j*2\pi*7*4/8} & e^{-j*2\pi*7*5/8} & e^{-j*2\pi*7*6/8} & e^{-j*2\pi*7*7/8} \end{bmatrix} \begin{bmatrix} s_0 \\ s_1 \\ s_2 \\ s_3 \\ s_4 \\ s_5 \\ s_6 \\ s_7 \end{bmatrix}.$$

Alternatively, the first preset formula may also be an equation as follows.

$$\begin{bmatrix} f_0 \\ f_1 \\ f_2 \\ f_3 \\ f_4 \\ f_5 \\ f_6 \\ f_7 \end{bmatrix} = \begin{bmatrix} 1 & 1 & 1 & 1 & 1 & 1 & 1 & 1 \\ 1 & e^{j*2\pi/8} & e^{j*2\pi*2/8} & e^{j*2\pi*3/8} & e^{j*2\pi*4/8} & e^{j*2\pi*5/8} & e^{j*2\pi*6/8} & e^{j*2\pi*7/8} \\ 1 & e^{j*2\pi*2/8} & e^{j*2\pi*2*2/8} & e^{j*2\pi*2*3/8} & e^{j*2\pi*2*4/8} & e^{j*2\pi*2*5/8} & e^{j*2\pi*2*6/8} & e^{j*2\pi*2*7/8} \\ 1 & e^{j*2\pi*3/8} & e^{j*2\pi*3*2/8} & e^{j*2\pi*3*3/8} & e^{j*2\pi*3*4/8} & e^{j*2\pi*3*5/8} & e^{j*2\pi*3*6/8} & e^{j*2\pi*3*7/8} \\ 1 & e^{j*2\pi*4/8} & e^{j*2\pi*4*2/8} & e^{j*2\pi*4*3/8} & e^{j*2\pi*4*4/8} & e^{j*2\pi*4*5/8} & e^{j*2\pi*4*6/8} & e^{j*2\pi*4*7/8} \\ 1 & e^{j*2\pi*5/8} & e^{j*2\pi*5*2/8} & e^{j*2\pi*5*3/8} & e^{j*2\pi*5*4/8} & e^{j*2\pi*5*5/8} & e^{j*2\pi*5*6/8} & e^{j*2\pi*5*7/8} \\ 1 & e^{j*2\pi*6/8} & e^{j*2\pi*6*2/8} & e^{j*2\pi*6*3/8} & e^{j*2\pi*6*4/8} & e^{j*2\pi*6*5/8} & e^{j*2\pi*6*6/8} & e^{j*2\pi*6*7/8} \\ 1 & e^{j*2\pi*7/8} & e^{j*2\pi*7*2/8} & e^{j*2\pi*7*3/8} & e^{j*2\pi*7*4/8} & e^{j*2\pi*7*5/8} & e^{j*2\pi*7*6/8} & e^{j*2\pi*7*7/8} \end{bmatrix} \begin{bmatrix} s_0 \\ s_1 \\ s_2 \\ s_3 \\ s_4 \\ s_5 \\ s_6 \\ s_7 \end{bmatrix}.$$

Based on the implementations, the signal sending end may operate on the first data sequence according to the preset formula, to obtain the second data sequence, which is fast and convenient, and requires fewer operations, thereby reducing the operation complexity of the signal sending end.

Based on this mode, the signal sending end may operate on the first data sequence according to the preset formula, to obtain the second data sequence, which is fast and convenient.

In another implementation, the signal sending end may determine the second data sequence according to a preset correspondence between the first data sequence and the second data sequence.

For example, the signal sending end may be pre-configured with preset correspondences between multiple data sequences. The multiple data sequences include the first data sequence and the second data sequence.

Based on the method shown in FIG. 3, in the embodiments of the present disclosure, the second data sequence may be determined according to the first data sequence, which reduces the operations that need to be performed, thereby reducing the operation complexity of the signal sending end when generating the LP-WUS. For example, in a case where the signal sending end does not support scrambling, the signal sending end may obtain the second data sequence with the same number of elements included in the first data sequence, according to the first data sequence, which reduces the operations that need to be performed, while the second data sequence may also be obtained, thereby increasing the application scenarios of the method.

In addition, the method provided by the embodiments of the present disclosure does not require additional hardware/software, and thus, does not require additional costs. At the same time, since no additional hardware/software is required, it may be sent simultaneously with other communication signals (such as 5G signals).

In some embodiments, the method provided by the embodiments of the present disclosure may further include: obtaining the first data sequence from a third data sequence according to a second mode.

The second mode may include at least one of encoding, modulation, modulation encoding, or a mapping rule from the third data sequence to the first data sequence.

For the encoding, the modulation and the modulation encoding, reference may be made to the prior art, which will not be repeated herein. The mapping rule from the third data sequence to the first data sequence may refer to a correspondence or an operation mode between the third data sequence and the second data sequence. For example, the mapping rule may be a mapping rule table, or a formula, etc. The mapping rule may be pre-configured by the signal sending end.

The third data sequence is used to carry bit information. The bit information may be bit information carried by the first data sequence. For example, the third data sequence $B_X = [b_0, b_1, \cdots, b_{X-1}]$. X is a positive integer.

In the embodiments of the present disclosure, for different values of the element $b_i$ in the third data sequence $B_X$, the corresponding processed data sequence may be $C_{Y,b_i} = [c_{0,b_i}, c_{1,b_i}, ..., c_{Y-1,b_i}]$. In the above formula, Y is an integer greater than or equal to 1, and $0 \leq i \leq X-1$.

For example, when Y=2, a correspondence between $b_i$ and $C_{Y,b_i}$ may be shown in Table 7 or Table 8.

Table 7

| Value of $b_i$ | $C_{Y,b_i}$, Y=2 |
|---|---|
| 0 | 1 0 |
| 1 | 0 1 |

Table 8

| Value of $b_i$ | $C_{Y,b_i}$, Y=2 |
|---|---|
| 0 | 0 1 |
| 1 | 1 0 |

For another example, when Y=4, a correspondence between $b_i$ and $C_{Y,b_i}$ is shown in Table 9 or Table 10.

Table 9

| Value of $b_i$ | $C_{Y,b_i}$, Y=4 |
|---|---|
| 0 | 1 0 1 0 |
| 1 | 0 1 0 1 |

Table 10

| Value of $b_i$ | $C_{Y,b_i}$, Y=4 |
|---|---|
| 0 | 0 1 0 1 |

(continued)

| Value of $b_i$ | $C_{Y, b_i}$, Y=4 |
|---|---|
| 1 | 1 0 1 0 |

When Y= 8, a correspondence between $b_i$ and $C_{Y, b_i}$ is shown in Table 11 or Table 12.

Table 11

| Value of $b_i$ | $C_{Y, b_i}$, Y=8 |
|---|---|
| 0 | 10101010 |
| 1 | 01010101 |

Table 12

| Value of $b_i$ | $C_{Y, b_i}$, Y=8 |
|---|---|
| 0 | 01010101 |
| 1 | 10101010 |

It should be noted that, the data in Table 7 to Table 12 above are only examples, and the data may also be other elements, which is not limited thereto.

Based on this embodiment, the signal receiving end may accurately determine the first data sequence according to the third data sequence.

In some embodiments, as shown in FIG. 4, the method provided in the embodiments of the present disclosure may further include S401 to S402.

S401, perform data padding on K subcarriers based on the second data sequence, to obtain a padded data sequence.

K is an integer greater than or equal to 1. The K subcarriers are subcarriers occupied by the LU-LPS in the frequency domain.

For example, the data padded on the K subcarriers may be $D_K = [d_0, d_1, d_2, d_3, ..., d_{K-1}]$.

The data padded on a subcarrier with an index k is $d_k$. The $d_k$ may be generated according to a formula $d_k = b \cdot a(k) \cdot f_{k'}$. The $f_{k'}$ is an element in the above second data sequence.

In the above formula, $0 \leq k \leq K-1$, $k' = mod(k, N_s)$. The *mod* represents taking the remainder or modulus. For example, *mod (x, y)* represents returning the remainder obtained by dividing x by y.

When $1 \leq k \leq K - 1$, $a(k) = \dfrac{1 - e^{-j\frac{2\pi}{N_s}k}}{1 - e^{-j\frac{2\pi}{N_s \cdot N_r}k}}$ when k=0, a(k) = $N_r$. In the above formula, $N_s$ = M. $N_r$ = K/$N_s$. b = sqrt($N_s$/K) or b = sqrt(1/$N_r$).

S402, perform an N-point IDFT/IFFT operation on the padded data, to obtain time domain data with N sampling points.

The data with the N sampling points $T_N = [t_0, t_1, t_2, t_3, ..., t_{N-1}]$. The data with the N sampling points may be the above LP-WUS.

In an example, as shown in FIG. 5, when the frequency domain includes N subcarriers, the N-point IDFT/IFFT operation may be performed on the padded data on the N subcarriers to obtain the time domain data $T_N = [t_0, t_1, t_2, t_3, ..., t_{N-1}]$ with N sampling points.

In the above formula, $T_N = [t_0, t_1, t_2, t_3, ..., t_{N-1}]$ is the sampling data of M OOK time domain symbols. In the time domain data $T_N$, $[t_0, t_1, t_2, t_3, ..., t_{N/M-1}]$ is sampling point data of a first OOK time domain symbol among the M OOK time domain symbols, $[t_{N/M}, t_{N/M+1}, ..., t_{2N/M-1}]$ is sampling point data of a second OOK time domain symbol among the M OOK time domain symbols.

And so on, $[t_{(M-1)N/M}, t_{(M-1)N/M+1}, ..., t_{N-1}]$ is sampling point data of an M-th OOK time domain symbol among the M OOK time domain symbols.

In the embodiments of the present disclosure, after obtaining the time domain data with N sampling points, the adding CP operation may be performed on the time domain data with the N sampling points, and the time domain data on which the adding CP operation has been performed may be sent to the signal receiving end.

The signal receiving end may be the signal receiving end in FIG. 2. For the adding CP operation, reference may be made to the above description, which will not be repeated herein.

Based on this embodiment, in the embodiments of the present disclosure, after obtaining the data sequence to be sent, the corresponding time domain data may be obtained by padding the subcarriers occupied by the LU-WPS and performing the N-point IDFT/IFFT operation.

As shown in FIG. 6, it is yet another communication method, provided in the embodiments of the present disclosure, and as shown in FIG. 6, the method may include S601.

S601, a signal sending end determines a fourth data sequence according to a first data sequence.

For the related descriptions and determination method of the first data sequence, references may be made to the above S301, which will not be repeated herein. A number of elements included in the fourth data sequence is greater than a number of elements included in the first data sequence.

In an implementation, the signal sending end may generate a fifth data sequence according to the first data sequence, and determine the fourth data sequence according to the fifth data sequence.

A number of elements included in the fifth data sequence is the same as the number of elements included in the fourth data sequence.

In an example, the signal sending end may generate the fifth data sequence from the first data sequence according to a second preset formula. For example, the second preset formula may be an equation as follows.

$$P_H = \lfloor v_0 \cdot s_0, v_0 \cdot s_0, \cdots, v_0^{\ -} \cdot s_0, v_0 \cdot s_0, v_0 \cdot s_0, \cdots, v_0^{\ -} \cdot s_0, \ldots, v_{M-1} \cdot s_{M-1}, v_{M-1} \cdot s_{M-1}, \cdots, v_{M-1} s_{M-1} \rfloor$$

.

In the above formula, $P_H$ is the fifth data sequence, M and Z are both positive integers, H is the number of elements included in the fifth data sequence, H=Z*M, $v_0^0$ to $v_{M-1}^1$ are coefficients.

In yet another example, the signal sending end may process the fifth data sequence according to a third mode, to obtain the fourth data sequence.

For example, the third mode may include one of 2-1 to 2-5.

2-1, H-point discrete Fourier transform.

For the H-point discrete Fourier transform, reference may be made to the prior art, which will not be repeated herein.

2- 2, H-point fast Fourier transform.

For the H-point fast Fourier transform, reference may be made to the prior art, which will not be repeated herein.

2- 3, H-point inverse discrete Fourier transform.

For the H-point inverse discrete Fourier transform, reference may be made to the prior art, which will not be repeated herein.

2- 4, H-point inverse fast Fourier transform.

For the H-point inverse fast Fourier transform, reference may be made to the prior art, which will not be repeated herein.

2-5, generated according to a third preset formula.

The third preset formula may be an equation as follows.

$$\begin{bmatrix} R_0 \\ R_1 \\ \vdots \\ R_k \\ \vdots \\ R_{H-1} \end{bmatrix} = \begin{bmatrix} 1 & 1 & \cdots & 1 & \cdots & 1 \\ 1 & e^{-j2\pi/H} & \cdots & e^{-j2\pi h/H} & \cdots & e^{-j2\pi(H-1)/H} \\ \vdots & \vdots & \vdots & \vdots & \vdots & \vdots \\ 1 & e^{-j2\pi k/H} & \vdots & e^{-j2\pi kh/H} & \vdots & e^{-j2\pi k(H-1)/H} \\ \vdots & \vdots & \vdots & \vdots & \vdots & \vdots \\ 1 & e^{-j2\pi(H-1)/H} & \vdots & e^{-j2\pi(H-1)h/H} & \vdots & e^{-j2\pi(H-1)(H-1)/H} \end{bmatrix} \begin{bmatrix} p_0 \\ p_1 \\ \vdots \\ p_h \\ \vdots \\ p_{h-1} \end{bmatrix}.$$

Alternatively, the third preset formula may be an equation as follows.

$$\begin{bmatrix} R_0 \\ R_1 \\ \vdots \\ R_k \\ \vdots \\ R_{H-1} \end{bmatrix} = \begin{bmatrix} 1 & 1 & \cdots & 1 & \cdots & 1 \\ 1 & e^{j2\pi/H} & \cdots & e^{j2\pi h/H} & \cdots & e^{j2\pi(H-1)/H} \\ \vdots & \vdots & \vdots & \vdots & \vdots & \vdots \\ 1 & e^{j2\pi k/H} & \vdots & e^{j2\pi kh/H} & \vdots & e^{j2\pi k(H-1)/H} \\ \vdots & \vdots & \vdots & \vdots & \vdots & \vdots \\ 1 & e^{j2\pi(H-1)/H} & \vdots & e^{j2\pi(H-1)h/H} & \vdots & e^{j2\pi(H-1)(H-1)/H} \end{bmatrix} \begin{bmatrix} p_0 \\ p_1 \\ \vdots \\ p_h \\ \vdots \\ p_{H-1} \end{bmatrix}.$$

In the above formula, m and k are both greater than or equal to 0 and less than or equal to H-1, $R_0$ to $R_{H-1}$ are elements in the fourth data sequence, and $P_0$ to $P_{H-1}$ are elements in the fifth data sequence.

Based on the technical solutions of FIG. 6, in the embodiments of the present disclosure, the signal sending end may obtain a data sequence including a larger number of elements according to the first data sequence. The data sequence may be a data sequence to be sent. In this way, the signal sending end does not need to perform the DFT/FFT operation and the IDFT/IFFT operation on the first data sequence, thereby reducing the number of operations and thus reducing the operation complexity. For example, in a case where the signal sending end supports scrambling, the signal sending end may obtain the second data sequence with a larger number of elements than included in the first data sequence, according to the first data sequence, which reduces the operations that need to be performed, while the second data sequence may also be obtained, thereby increasing the application scenarios of the method.

In some embodiments, as shown in FIG. 7, the method provided in the embodiments of the present disclosure may further include S701 to S702.

S701, perform data padding on K subcarriers based on the fourth data sequence, to obtain a padded data sequence.

S702, perform an N-point IDFT/IFFT operation on the padded data sequence, to obtain time domain data with N sampling points.

For the above S701 and S702, references may be made to the related descriptions of the above S401 and S402, which will not be repeated herein.

The various solutions in the above embodiments of the present disclosure may be combined without contradiction.

It can be understood that, in order to implement the above functions, the communication apparatus contains corresponding hardware structures and/or software modules for performing various functions. Those skilled in the art should easily realize that the present disclosure can be implemented in the form of hardware or a combination of hardware and computer software, in combination with the algorithm steps of various examples described in the embodiments of the present disclosure. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the present disclosure.

In the embodiments of the present disclosure, the communication apparatus may be divided into functional modules according to the above-mentioned method embodiments, and for example, each functional module may be divided corresponding to each function, or two or more functions may also be integrated into one functional module. The above-mentioned integrated module may be implemented in the form of hardware or may also be implemented in the form of software. It should be noted that, the division of the modules in the embodiments of the present disclosure is schematic, which is only a logical functional division, and there may be other divisions in actual implementations. The example in which each functional module is divided corresponding to each function, is taken for explanation below.

FIG. 8 is a structural schematic diagram of a communication apparatus, provided in the embodiments of the present disclosure, and the communication apparatus may perform the communication method provided in the above method embodiments. As shown in FIG. 8, the communication apparatus includes a determining unit 801.

The determining unit 801 is configured to determine a second data sequence according to a first data sequence. A number of elements included in the first data sequence is the same as a number of elements included in the second data sequence.

In an example, the determining unit 801 is configured to processing the first data sequence according to a first mode, to obtain the second data sequence. The first mode includes one of: M-point discrete Fourier transform; or M-point fast Fourier transform; or M-point inverse discrete Fourier transform; or M-point inverse fast Fourier transform; or generating according to a first preset formula; M being the number of elements included in the first data sequence, and M being a positive integer.

In an example, the first preset formula is an equation as follows.

$$\begin{bmatrix} f_0 \\ f_1 \\ \vdots \\ f_k \\ \vdots \\ f_{M-1} \end{bmatrix} = \begin{bmatrix} 1 & 1 & \cdots & 1 & \cdots & 1 \\ 1 & e^{-j2\pi/M} & \cdots & e^{-j2\pi m/M} & \cdots & e^{-j2\pi(M-1)/M} \\ \vdots & \vdots & \vdots & \vdots & \vdots & \vdots \\ 1 & e^{-j2\pi k/M} & \vdots & e^{-j2\pi km/M} & \vdots & e^{-j2\pi k(M-1)/M} \\ \vdots & \vdots & \vdots & \vdots & \vdots & \vdots \\ 1 & e^{-j2\pi(M-1)/M} & \vdots & e^{-j2\pi(M-1)m/M} & \vdots & e^{-j2\pi(M-1)(M-1)/M} \end{bmatrix} \begin{bmatrix} s_0 \\ s_1 \\ \vdots \\ s_m \\ \vdots \\ s_{M-1} \end{bmatrix};$$

or

$$
\begin{bmatrix} f_0 \\ f_1 \\ \vdots \\ f_k \\ \vdots \\ f_{M-1} \end{bmatrix} = \begin{bmatrix} 1 & 1 & \cdots & 1 & \cdots & 1 \\ 1 & e^{j2\pi/M} & \cdots & e^{j2\pi m/M} & \cdots & e^{j2\pi(M-1)/M} \\ \vdots & \vdots & \vdots & \vdots & & \vdots \\ 1 & e^{j2\pi k/M} & \vdots & e^{j2\pi km/M} & \vdots & e^{j2\pi k(M-1)/M} \\ \vdots & \vdots & \vdots & \vdots & & \vdots \\ 1 & e^{j2\pi(M-1)/M} & \vdots & e^{j2\pi(M-1)m/M} & \vdots & e^{j2\pi(M-1)(M-1)/M} \end{bmatrix} \begin{bmatrix} s_0 \\ s_1 \\ \vdots \\ s_m \\ \vdots \\ s_{M-1} \end{bmatrix};
$$

in the above formula, m and k are both greater than or equal to 0 and less than or equal to M-1, $f_0$ to $f_{M-1}$ are elements in the second data sequence, and $s_0$ to $s_{M-1}$ are elements in the first data sequence.

In an example, the M=2, the first preset formula may be an equation as follows.

$$
\begin{bmatrix} f_0 \\ f_1 \end{bmatrix} = \begin{bmatrix} 1 & 1 \\ 1 & e^{-j2\pi/2} \end{bmatrix} \begin{bmatrix} s_0 \\ s_1 \end{bmatrix}; \text{ or } \begin{bmatrix} f_0 \\ f_1 \end{bmatrix} = \begin{bmatrix} 1 & 1 \\ 1 & e^{j2\pi/2} \end{bmatrix} \begin{bmatrix} s_0 \\ s_1 \end{bmatrix}.
$$

In an example, the M=4, the first preset formula may be an equation as follows.

$$
\begin{bmatrix} f_0 \\ f_1 \\ f_2 \\ f_3 \end{bmatrix} = \begin{bmatrix} 1 & 1 & 1 & 1 \\ 1 & e^{-j*2\pi/4} & e^{-j*2\pi*2/4} & e^{-j*2\pi*3/4} \\ 1 & e^{-j*2\pi*2/4} & e^{-j*2\pi*2*2/4} & e^{-j*2\pi*2*3/4} \\ 1 & e^{-j*2\pi*3/4} & e^{-j*2\pi*3*2/4} & e^{-j*2\pi*3*3/4} \end{bmatrix} \begin{bmatrix} s_0 \\ s_1 \\ s_2 \\ s_3 \end{bmatrix};
$$

or

$$
\begin{bmatrix} f_0 \\ f_1 \\ f_2 \\ f_3 \end{bmatrix} = \begin{bmatrix} 1 & 1 & 1 & 1 \\ 1 & e^{j*2\pi/4} & e^{j*2\pi*2/4} & e^{j*2\pi*3/4} \\ 1 & e^{j*2\pi*2/4} & e^{j*2\pi*2*2/4} & e^{j*2\pi*2*3/4} \\ 1 & e^{j*2\pi*3/4} & e^{j*2\pi*3*2/4} & e^{j*2\pi*3*3/4} \end{bmatrix} \begin{bmatrix} s_0 \\ s_1 \\ s_2 \\ s_3 \end{bmatrix}.
$$

In an example, the M=8, the first preset formula may be an equation as follows.

$$
\begin{bmatrix} f_0 \\ f_1 \\ f_2 \\ f_3 \\ f_4 \\ f_5 \\ f_6 \\ f_7 \end{bmatrix} = \begin{bmatrix} 1 & 1 & 1 & 1 & 1 & 1 & 1 & 1 \\ 1 & e^{-j*2\pi/8} & e^{-j*2\pi*2/8} & e^{-j*2\pi*3/8} & e^{-j*2\pi*4/8} & e^{-j*2\pi*5/8} & e^{-j*2\pi*6/8} & e^{-j*2\pi*7/8} \\ 1 & e^{-j*2\pi*2/8} & e^{-j*2\pi*2*2/8} & e^{-j*2\pi*2*3/8} & e^{-j*2\pi*2*4/8} & e^{-j*2\pi*2*5/8} & e^{-j*2\pi*2*6/8} & e^{-j*2\pi*2*7/8} \\ 1 & e^{-j*2\pi*3/8} & e^{-j*2\pi*3*2/8} & e^{-j*2\pi*3*3/8} & e^{-j*2\pi*3*4/8} & e^{-j*2\pi*3*5/8} & e^{-j*2\pi*3*6/8} & e^{-j*2\pi*3*7/8} \\ 1 & e^{-j*2\pi*4/8} & e^{-j*2\pi*4*2/8} & e^{-j*2\pi*4*3/8} & e^{-j*2\pi*4*4/8} & e^{-j*2\pi*4*5/8} & e^{-j*2\pi*4*6/8} & e^{-j*2\pi*4*7/8} \\ 1 & e^{-j*2\pi*5/8} & e^{-j*2\pi*5*2/8} & e^{-j*2\pi*5*3/8} & e^{-j*2\pi*5*4/8} & e^{-j*2\pi*5*5/8} & e^{-j*2\pi*5*6/8} & e^{-j*2\pi*5*7/8} \\ 1 & e^{-j*2\pi*6/8} & e^{-j*2\pi*6*2/8} & e^{-j*2\pi*6*3/8} & e^{-j*2\pi*6*4/8} & e^{-j*2\pi*6*5/8} & e^{-j*2\pi*6*6/8} & e^{-j*2\pi*6*7/8} \\ 1 & e^{-j*2\pi*7/8} & e^{-j*2\pi*7*2/8} & e^{-j*2\pi*7*3/8} & e^{-j*2\pi*7*4/8} & e^{-j*2\pi*7*5/8} & e^{-j*2\pi*7*6/8} & e^{-j*2\pi*7*7/8} \end{bmatrix} \begin{bmatrix} s_0 \\ s_1 \\ s_2 \\ s_3 \\ s_4 \\ s_5 \\ s_6 \\ s_7 \end{bmatrix};
$$

or

$$
\begin{bmatrix} f_0 \\ f_1 \\ f_2 \\ f_3 \\ f_4 \\ f_5 \\ f_6 \\ f_7 \end{bmatrix} = \begin{bmatrix} 1 & 1 & 1 & 1 & 1 & 1 & 1 & 1 \\ 1 & e^{j*2\pi/8} & e^{j*2\pi*2/8} & e^{j*2\pi*3/8} & e^{j*2\pi*4/8} & e^{j*2\pi*5/8} & e^{j*2\pi*6/8} & e^{j*2\pi*7/8} \\ 1 & e^{j*2\pi*2/8} & e^{j*2\pi*2*2/8} & e^{j*2\pi*2*3/8} & e^{j*2\pi*2*4/8} & e^{j*2\pi*2*5/8} & e^{j*2\pi*2*6/8} & e^{j*2\pi*2*7/8} \\ 1 & e^{j*2\pi*3/8} & e^{j*2\pi*3*2/8} & e^{j*2\pi*3*3/8} & e^{j*2\pi*3*4/8} & e^{j*2\pi*3*5/8} & e^{j*2\pi*3*6/8} & e^{j*2\pi*3*7/8} \\ 1 & e^{j*2\pi*4/8} & e^{j*2\pi*4*2/8} & e^{j*2\pi*4*3/8} & e^{j*2\pi*4*4/8} & e^{j*2\pi*4*5/8} & e^{j*2\pi*4*6/8} & e^{j*2\pi*4*7/8} \\ 1 & e^{j*2\pi*5/8} & e^{j*2\pi*5*2/8} & e^{j*2\pi*5*3/8} & e^{j*2\pi*5*4/8} & e^{j*2\pi*5*5/8} & e^{j*2\pi*5*6/8} & e^{j*2\pi*5*7/8} \\ 1 & e^{j*2\pi*6/8} & e^{j*2\pi*6*2/8} & e^{j*2\pi*6*3/8} & e^{j*2\pi*6*4/8} & e^{j*2\pi*6*5/8} & e^{j*2\pi*6*6/8} & e^{j*2\pi*6*7/8} \\ 1 & e^{j*2\pi*7/8} & e^{j*2\pi*7*2/8} & e^{j*2\pi*7*3/8} & e^{j*2\pi*7*4/8} & e^{j*2\pi*7*5/8} & e^{j*2\pi*7*6/8} & e^{j*2\pi*7*7/8} \end{bmatrix} \begin{bmatrix} s_0 \\ s_1 \\ s_2 \\ s_3 \\ s_4 \\ s_5 \\ s_6 \\ s_7 \end{bmatrix}.
$$

In some examples, the determining unit 801 is configured to determine the second data sequence according to a preset correspondence between the first data sequence and the second data sequence.

In some examples, the first data sequence carries one-bit information or multi-bit information.

In some examples, in a case where the first data sequence carries one-bit information, the one-bit information corresponds to all elements in the first data sequence. In a case where the first data sequence carries multi-bit information, each-bit information of the multiple-bit information corresponds to multiple elements in the first data sequence.

In some examples, as shown in FIG. 8, the apparatus may also include a processing unit 802, configured to: obtain the first data sequence from a third data sequence according to a second mode; the second mode includes at least one of: encoding; or modulation; or modulation encoding; or, a mapping rule from the third data sequence to the first data sequence.

In some examples, the third data sequence is used to carry bit information.

In some embodiments, the determining unit 801 in the communication apparatus shown in FIG. 8 is configured to: determine a fourth data sequence according to the first data sequence; a number of elements included in the fourth data sequence is greater than a number of elements included in the first data sequence.

In some examples, the determining unit 801 is configured to: generate a fifth data sequence according to the first data sequence, and determine the fourth data sequence according to the fifth data sequence. A number of elements included in the fifth data sequence is the same as the number of elements included in the fourth data sequence.

In some examples, the determining unit 801 is configured to generate the fifth data sequence from the first data sequence according to a second preset formula. The second preset formula is an equation as follows.

$$P_H = [v_0^0 \cdot s_0, v_0^1 \cdot s_0, \cdots, v_0^{Z-1} \cdot s_0, v_0^0 \cdot s_0, v_0^1 \cdot s_0, \cdots, v_0^{Z-1} \cdot s_0, \cdots,$$

$$v_{M-1}^0 \cdot s_{M-1}, v_{M-1}^1 \cdot s_{M-1}, \cdots, v_{M-1}^{Z-1} s_{M-1}];$$

in the above formula, $P_H$ is the fifth data sequence, M and Z are both positive integers, H is the number of elements included in the fifth data sequence, H=Z*M, $v_0^0$ to $v_{M-1}^1$ are coefficients, $s_0$ to $s_{M-1}$ are the elements included in the first data sequence.

In some examples, the determining unit 801 is configured to: process the fifth data sequence according to a third mode, to obtain the fourth data sequence; the third mode includes one of: H-point discrete Fourier transform; or H-point fast Fourier transform; or H-point inverse discrete Fourier transform; or H-point inverse fast Fourier transform; or generating according to a third preset formula.

In some examples, the third preset formula may be an equation as follows.

$$\begin{bmatrix} R_0 \\ R_1 \\ \vdots \\ R_k \\ \vdots \\ R_{H-1} \end{bmatrix} = \begin{bmatrix} 1 & 1 & \cdots & 1 & \cdots & 1 \\ 1 & e^{-j2\pi/H} & \cdots & e^{-j2\pi h/H} & \cdots & e^{-j2\pi(H-1)/H} \\ \vdots & \vdots & \vdots & \vdots & \vdots & \vdots \\ 1 & e^{-j2\pi k/H} & \vdots & e^{-j2\pi kh/H} & \vdots & e^{-j2\pi k(H-1)/H} \\ \vdots & \vdots & \vdots & \vdots & \vdots & \vdots \\ 1 & e^{-j2\pi(H-1)/H} & \vdots & e^{-j2\pi(H-1)h/H} & \vdots & e^{-j2\pi(H-1)(H-1)/H} \end{bmatrix} \begin{bmatrix} p_0 \\ p_1 \\ \vdots \\ p_h \\ \vdots \\ p_{h-1} \end{bmatrix};$$

or

$$\begin{bmatrix} R_0 \\ R_1 \\ \vdots \\ R_k \\ \vdots \\ R_{H-1} \end{bmatrix} = \begin{bmatrix} 1 & 1 & \cdots & 1 & \cdots & 1 \\ 1 & e^{j2\pi/H} & \cdots & e^{j2\pi h/H} & \cdots & e^{j2\pi(H-1)/H} \\ \vdots & \vdots & \vdots & \vdots & \vdots & \vdots \\ 1 & e^{j2\pi k/H} & \vdots & e^{j2\pi kh/H} & \vdots & e^{j2\pi k(H-1)/H} \\ \vdots & \vdots & \vdots & \vdots & \vdots & \vdots \\ 1 & e^{j2\pi(H-1)/H} & \vdots & e^{j2\pi(H-1)h/H} & \vdots & e^{j2\pi(H-1)(H-1)/H} \end{bmatrix} \begin{bmatrix} p_0 \\ p_1 \\ \vdots \\ p_h \\ \vdots \\ p_{H-1} \end{bmatrix};$$

in the above formula, m and k are both greater than or equal to 0 and less than or equal to H-1, $R_0$ to $R_{H-1}$ are the elements in the fourth data sequence, and $P_0$ to $P_{H-1}$ are the elements in the fifth data sequence.

In some examples, the first data sequence carries one-bit information or multi-bit information.

In some examples, in a case where the first data sequence carries one-bit information, the one piece of bit information corresponds to all elements in the first data sequence. In a case where the first data sequence carries multi-bit information, each-bit information of the multi-bit information corresponds to multiple elements in the first data sequence.

In some examples, the processing unit 802 is configured to: obtain the first data sequence from a third data sequence according to a second mode; the second mode includes at least one of: encoding; or modulation; or modulation encoding; or a mapping rule from the third data sequence to the first data sequence.

In some examples, the third data sequence is used to carry bit information.

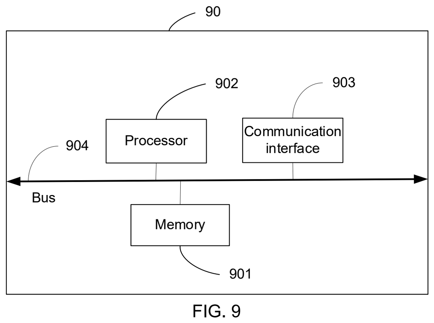

In a case where the functions of the above integrated modules are implemented in the form of hardware, the embodiments of the present disclosure provide another structure of the communication apparatus involved in the above embodiments. As shown in FIG. 9, the communication apparatus 90 includes a processor 902 and a bus 904. In some embodiments, the communication apparatus may further include a memory 901; in some embodiments, the communication apparatus may further include a communication interface 903.

The processor 902 may implement or perform various exemplary logical blocks, modules and circuits described in conjunction with the embodiments of the present disclosure. The processor 902 may be a central processing unit, a general-purpose processor, a digital signal processor, an application specific integrated circuit, a field programmable gate array or other programmable logic devices, a transistor logic device, a hardware component or any combination thereof. The processor 902 may implement or perform various exemplary logical blocks, modules and circuits described in conjunction with the embodiments of the present disclosure. The processor 902 may also be a combination that implements computing functions, for example, including a combination of one or more microprocessors, a combination of a digital signal processor (DSP) and a microprocessor, or the like.

The communication interface 903 is configured to connect with other devices via a communication network. The communication network may be an Ethernet, a radio access network, a wireless local area network (WLAN), or the like.

The memory 901 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 901 may exist independently of the processor 902, and the memory 901 may be connected to the processor 902 via the bus 904 and is used for storing instructions or program codes. The processor 902, when calling and executing the instructions or program codes stored in the memory 901, is capable of implementing the communication method provided in the embodiments of the present disclosure.

As another implementation, the memory 901 may also be integrated with the processor 902.

The bus 904 may be an extended industry standard architecture (EISA) bus or the like. Buses 904 may be divided into address buses, data buses, control buses, and the like. For the convenience of representation, only one thick line is used in FIG. 9 for representation, but it does not mean that there is only one bus or one type of bus.

Some embodiments of the present disclosure provide a computer readable storage medium (e.g., a non-transitory computer readable storage medium), and the computer readable storage medium has stored computer program instructions therein, and the computer program instructions, when executed on a computer, cause the computer to perform the communication method as described in any embodiment of the above-mentioned embodiments.

Exemplarily, the above-mentioned computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage medium described in the present disclosure may represent one or more devices and/or other machine-readable storage media for storing information. The term "machine readable storage medium" may include, but be not limited to, a radio channel and various other media capable of storing, containing, and/or carrying instructions and/or data.

Some embodiments of the present disclosure provide a computer program product including instructions, and the computer program product, when running on a computer, causes the computer to perform the communication method as described in any embodiment of the above-mentioned embodiments.

The above descriptions are only specific implementations of the present disclosure, but the protection scope of the present disclosure is not limited thereto, any variations or replacements within the technical scope disclosed in the present disclosure shall be included in the protection scope of the present disclosure. Therefore, the protection scope of the present disclosure should be based on the protection scope of claims.

## Claims

1. A communication method, **characterized by** comprising:
   determining a second data sequence according to a first data sequence; wherein a number of elements comprised in the first data sequence is the same as a number of elements comprised in the second data sequence.

2. The method according to claim 1, wherein determining the second data sequence according to the first data sequence comprises:

processing the first data sequence according to a first mode, to obtain the second data sequence, wherein the first mode comprises one of:

M-point discrete Fourier transform; or
M-point fast Fourier transform; or
M-point inverse discrete Fourier transform; or
M-point inverse fast Fourier transform; or
generating according to a first preset formula;

wherein M is the number of elements comprised in the first data sequence, and M is a positive integer.

3. The method according to claim 2, wherein the first preset formula is:

$$
\begin{bmatrix} f_0 \\ f_1 \\ \vdots \\ f_k \\ \vdots \\ f_{M-1} \end{bmatrix} = \begin{bmatrix} 1 & 1 & \cdots & 1 & \cdots & 1 \\ 1 & e^{-j2\pi/M} & \cdots & e^{-j2\pi m/M} & \cdots & e^{-j2\pi(M-1)/M} \\ \vdots & \vdots & \vdots & \vdots & & \vdots \\ 1 & e^{-j2\pi k/M} & \vdots & e^{-j2\pi km/M} & \vdots & e^{-j2\pi k(M-1)/M} \\ \vdots & \vdots & \vdots & \vdots & & \vdots \\ 1 & e^{-j2\pi(M-1)/M} & \vdots & e^{-j2\pi(M-1)m/M} & \vdots & e^{-j2\pi(M-1)(M-1)/M} \end{bmatrix} \begin{bmatrix} s_0 \\ s_1 \\ \vdots \\ s_m \\ \vdots \\ s_{M-1} \end{bmatrix};
$$

or

$$
\begin{bmatrix} f_0 \\ f_1 \\ \vdots \\ f_k \\ \vdots \\ f_{M-1} \end{bmatrix} = \begin{bmatrix} 1 & 1 & \cdots & 1 & \cdots & 1 \\ 1 & e^{j2\pi/M} & \cdots & e^{j2\pi m/M} & \cdots & e^{j2\pi(M-1)/M} \\ \vdots & \vdots & \vdots & \vdots & & \vdots \\ 1 & e^{j2\pi k/M} & \vdots & e^{j2\pi km/M} & \vdots & e^{j2\pi k(M-1)/M} \\ \vdots & \vdots & \vdots & \vdots & & \vdots \\ 1 & e^{j2\pi(M-1)/M} & \vdots & e^{j2\pi(M-1)m/M} & \vdots & e^{j2\pi(M-1)(M-1)/M} \end{bmatrix} \begin{bmatrix} s_0 \\ s_1 \\ \vdots \\ s_m \\ \vdots \\ s_{M-1} \end{bmatrix};
$$

wherein m and k are both greater than or equal to 0 and less than or equal to M-1, $f_0$ to $f_{M-1}$ are the elements in the second data sequence, and $s_0$ to $s_{M-1}$ are the elements in the first data sequence.

4. The method according to claim 2, wherein the M=2, the first preset formula is:

$$
\begin{bmatrix} f_0 \\ f_1 \end{bmatrix} = \begin{bmatrix} 1 & 1 \\ 1 & e^{-j2\pi/2} \end{bmatrix} \begin{bmatrix} s_0 \\ s_1 \end{bmatrix}; \text{ or, } \begin{bmatrix} f_0 \\ f_1 \end{bmatrix} = \begin{bmatrix} 1 & 1 \\ 1 & e^{j2\pi/2} \end{bmatrix} \begin{bmatrix} s_0 \\ s_1 \end{bmatrix}.
$$

5. The method according to claim 2 wherein the M=4, the first preset formula is:

$$
\begin{bmatrix} f_0 \\ f_1 \\ f_2 \\ f_3 \end{bmatrix} = \begin{bmatrix} 1 & 1 & 1 & 1 \\ 1 & e^{-j*2\pi/4} & e^{-j*2\pi*2/4} & e^{-j*2\pi*3/4} \\ 1 & e^{-j*2\pi*2/4} & e^{-j*2\pi*2*2/4} & e^{-j*2\pi*2*3/4} \\ 1 & e^{-j*2\pi*3/4} & e^{-j*2\pi*3*2/4} & e^{-j*2\pi*3*3/4} \end{bmatrix} \begin{bmatrix} s_0 \\ s_1 \\ s_2 \\ s_3 \end{bmatrix};
$$

or

$$
\begin{bmatrix} f_0 \\ f_1 \\ f_2 \\ f_3 \end{bmatrix} = \begin{bmatrix} 1 & 1 & 1 & 1 \\ 1 & e^{j*2\pi/4} & e^{j*2\pi*2/4} & e^{j*2\pi*3/4} \\ 1 & e^{j*2\pi*2/4} & e^{j*2\pi*2*2/4} & e^{j*2\pi*2*3/4} \\ 1 & e^{j*2\pi*3/4} & e^{j*2\pi*3*2/4} & e^{j*2\pi*3*3/4} \end{bmatrix} \begin{bmatrix} s_0 \\ s_1 \\ s_2 \\ s_3 \end{bmatrix}.
$$

6. The method according to claim 2, wherein the M=8, the first preset formula is:

$$
\begin{bmatrix} f_0 \\ f_1 \\ f_2 \\ f_3 \\ f_4 \\ f_5 \\ f_6 \\ f_7 \end{bmatrix} = \begin{bmatrix} 1 & 1 & 1 & 1 & 1 & 1 & 1 & 1 \\ 1 & e^{-j*2\pi/8} & e^{-j*2\pi*2/8} & e^{-j*2\pi*3/8} & e^{-j*2\pi*4/8} & e^{-j*2\pi*5/8} & e^{-j*2\pi*6/8} & e^{-j*2\pi*7/8} \\ 1 & e^{-j*2\pi*2/8} & e^{-j*2\pi*2*2/8} & e^{-j*2\pi*2*3/8} & e^{-j*2\pi*2*4/8} & e^{-j*2\pi*2*5/8} & e^{-j*2\pi*2*6/8} & e^{-j*2\pi*2*7/8} \\ 1 & e^{-j*2\pi*3/8} & e^{-j*2\pi*3*2/8} & e^{-j*2\pi*3*3/8} & e^{-j*2\pi*3*4/8} & e^{-j*2\pi*3*5/8} & e^{-j*2\pi*3*6/8} & e^{-j*2\pi*3*7/8} \\ 1 & e^{-j*2\pi*4/8} & e^{-j*2\pi*4*2/8} & e^{-j*2\pi*4*3/8} & e^{-j*2\pi*4*4/8} & e^{-j*2\pi*4*5/8} & e^{-j*2\pi*4*6/8} & e^{-j*2\pi*4*7/8} \\ 1 & e^{-j*2\pi*5/8} & e^{-j*2\pi*5*2/8} & e^{-j*2\pi*5*3/8} & e^{-j*2\pi*5*4/8} & e^{-j*2\pi*5*5/8} & e^{-j*2\pi*5*6/8} & e^{-j*2\pi*5*7/8} \\ 1 & e^{-j*2\pi*6/8} & e^{-j*2\pi*6*2/8} & e^{-j*2\pi*6*3/8} & e^{-j*2\pi*6*4/8} & e^{-j*2\pi*6*5/8} & e^{-j*2\pi*6*6/8} & e^{-j*2\pi*6*7/8} \\ 1 & e^{-j*2\pi*7/8} & e^{-j*2\pi*7*2/8} & e^{-j*2\pi*7*3/8} & e^{-j*2\pi*7*4/8} & e^{-j*2\pi*7*5/8} & e^{-j*2\pi*7*6/8} & e^{-j*2\pi*7*7/8} \end{bmatrix} \begin{bmatrix} s_0 \\ s_1 \\ s_2 \\ s_3 \\ s_4 \\ s_5 \\ s_6 \\ s_7 \end{bmatrix};
$$

or,

$$
\begin{bmatrix} f_0 \\ f_1 \\ f_2 \\ f_3 \\ f_4 \\ f_5 \\ f_6 \\ f_7 \end{bmatrix} = \begin{bmatrix} 1 & 1 & 1 & 1 & 1 & 1 & 1 & 1 \\ 1 & e^{j*2\pi/8} & e^{j*2\pi*2/8} & e^{j*2\pi*3/8} & e^{j*2\pi*4/8} & e^{j*2\pi*5/8} & e^{j*2\pi*6/8} & e^{j*2\pi*7/8} \\ 1 & e^{j*2\pi*2/8} & e^{j*2\pi*2*2/8} & e^{j*2\pi*2*3/8} & e^{j*2\pi*2*4/8} & e^{j*2\pi*2*5/8} & e^{j*2\pi*2*6/8} & e^{j*2\pi*2*7/8} \\ 1 & e^{j*2\pi*3/8} & e^{j*2\pi*3*2/8} & e^{j*2\pi*3*3/8} & e^{j*2\pi*3*4/8} & e^{j*2\pi*3*5/8} & e^{j*2\pi*3*6/8} & e^{j*2\pi*3*7/8} \\ 1 & e^{j*2\pi*4/8} & e^{j*2\pi*4*2/8} & e^{j*2\pi*4*3/8} & e^{j*2\pi*4*4/8} & e^{j*2\pi*4*5/8} & e^{j*2\pi*4*6/8} & e^{j*2\pi*4*7/8} \\ 1 & e^{j*2\pi*5/8} & e^{j*2\pi*5*2/8} & e^{j*2\pi*5*3/8} & e^{j*2\pi*5*4/8} & e^{j*2\pi*5*5/8} & e^{j*2\pi*5*6/8} & e^{j*2\pi*5*7/8} \\ 1 & e^{j*2\pi*6/8} & e^{j*2\pi*6*2/8} & e^{j*2\pi*6*3/8} & e^{j*2\pi*6*4/8} & e^{j*2\pi*6*5/8} & e^{j*2\pi*6*6/8} & e^{j*2\pi*6*7/8} \\ 1 & e^{j*2\pi*7/8} & e^{j*2\pi*7*2/8} & e^{j*2\pi*7*3/8} & e^{j*2\pi*7*4/8} & e^{j*2\pi*7*5/8} & e^{j*2\pi*7*6/8} & e^{j*2\pi*7*7/8} \end{bmatrix} \begin{bmatrix} s_0 \\ s_1 \\ s_2 \\ s_3 \\ s_4 \\ s_5 \\ s_6 \\ s_7 \end{bmatrix}.
$$

7. The method according to claim 1, wherein determining the second data sequence according to the first data sequence comprises:
determining the second data sequence according to a preset correspondence between the first data sequence and the second data sequence.

8. The method according to claim 1, wherein the first data sequence carries one-bit information or multi-bit information.

9. The method according to claim 8, wherein

in a case where the first data sequence carries one-bit information, the one-bit information corresponds to all elements in the first data sequence;
in a case where the first data sequence carries multi-bit information, each-bit information of the multiple-bit information corresponds to multiple elements in the first data sequence.

10. The method according to claim 1, further comprising:
obtaining the first data sequence from a third data sequence according to a second mode, wherein the second mode comprises at least one of:

encoding; or
modulation; or
modulation encoding; or
a mapping rule from the third data sequence to the first data sequence.

11. The method according to claim 10, wherein the third data sequence is used to carry bit information.

12. A communication method, **characterized by** comprising:
determining a fourth data sequence according to a first data sequence; wherein a number of elements comprised in the fourth data sequence is greater than a number of elements comprised in the first data sequence.

13. The method according to claim 12, wherein determining the fourth data sequence according to the first data sequence comprises:
generating a fifth data sequence according to the first data sequence, and determining the fourth data sequence according to the fifth data sequence, wherein a number of elements comprised in the fifth data sequence is the same as the number of elements comprised in the fourth data sequence.

**14.** The method according to claim 13, wherein generating the fifth data sequence according to the first data sequence comprises:

generating the fifth data sequence from the first data sequence according to a second preset formula; wherein the second preset formula is:

$$P_H = [v_0^0 \cdot s_0, v_0^1 \cdot s_0, \cdots, v_0^{Z-1} \cdot s_0, v_0^0 \cdot s_0, v_0^1 \cdot s_0, \cdots, v_0^{Z-1} \cdot s_0, \cdots,$$
$$v_{M-1}^0 \cdot s_{M-1}, v_{M-1}^1 \cdot s_{M-1}, \cdots, v_{M-1}^{Z-1} s_{M-1}];$$

wherein $P_H$ is the fifth data sequence, M and Z are both positive integers, H is the number of elements comprised in the fifth data sequence, H=Z*M, $v_0^0$ to $v_{M-1}^1$ are coefficients, $s_0$ to $s_{M-1}$ are the elements comprised in the first data sequence.

**15.** The method according to claim 13 or 14, wherein determining the fourth data sequence according to the fifth data sequence comprises:
processing the fifth data sequence according to a third mode, to obtain the fourth data sequence, wherein the third mode comprises one of:

H-point discrete Fourier transform; or
H-point fast Fourier transform; or
H-point inverse discrete Fourier transform; or
H-point inverse fast Fourier transform; or
generating according to a third preset formula.

**16.** The method according to claim 15, wherein the third preset formula is:

$$\begin{bmatrix} R_0 \\ R_1 \\ \vdots \\ R_k \\ \vdots \\ R_{H-1} \end{bmatrix} = \begin{bmatrix} 1 & 1 & \cdots & 1 & \cdots & 1 \\ 1 & e^{-j2\pi/H} & \cdots & e^{-j2\pi h/H} & \cdots & e^{-j2\pi(H-1)/H} \\ \vdots & \vdots & \vdots & \vdots & \vdots & \vdots \\ 1 & e^{-j2\pi k/H} & \vdots & e^{-j2\pi kh/H} & \vdots & e^{-j2\pi k(H-1)/H} \\ \vdots & \vdots & \vdots & \vdots & \vdots & \vdots \\ 1 & e^{-j2\pi(H-1)/H} & \vdots & e^{-j2\pi(H-1)h/H} & \vdots & e^{-j2\pi(H-1)(H-1)/H} \end{bmatrix} \begin{bmatrix} p_0 \\ p_1 \\ \vdots \\ p_h \\ \vdots \\ p_{h-1} \end{bmatrix};$$

or

$$\begin{bmatrix} R_0 \\ R_1 \\ \vdots \\ R_k \\ \vdots \\ R_{H-1} \end{bmatrix} = \begin{bmatrix} 1 & 1 & \cdots & 1 & \cdots & 1 \\ 1 & e^{j2\pi/H} & \cdots & e^{j2\pi h/H} & \cdots & e^{j2\pi(H-1)/H} \\ \vdots & \vdots & \vdots & \vdots & \vdots & \vdots \\ 1 & e^{j2\pi k/H} & \vdots & e^{j2\pi kh/H} & \vdots & e^{j2\pi k(H-1)/H} \\ \vdots & \vdots & \vdots & \vdots & \vdots & \vdots \\ 1 & e^{j2\pi(H-1)/H} & \vdots & e^{j2\pi(H-1)h/H} & \vdots & e^{j2\pi(H-1)(H-1)/H} \end{bmatrix} \begin{bmatrix} p_0 \\ p_1 \\ \vdots \\ p_h \\ \vdots \\ p_{H-1} \end{bmatrix};$$

wherein m and k are both greater than or equal to 0 and less than or equal to H-1, $R_0$ to $R_{H-1}$ are the elements in the fourth data sequence, and $P_0$ to $P_{H-1}$ are the elements in the fifth data sequence.

**17.** The method according to claim 12, wherein the first data sequence carries one-bit information or multi-bit information.

**18.** The method according to claim 17, wherein

in a case where the first data sequence carries one-bit information, the one piece of bit information corresponds to all elements in the first data sequence;
in a case where the first data sequence carries multi-bit information, each-bit information of the multi-bit information corresponds to multiple elements in the first data sequence.

**19.** The method according to claim 12, further comprising:

obtaining the first data sequence from a third data sequence according to a second mode, wherein the second mode comprises at least one of:

> encoding;
> modulation; or
> modulation encoding;

a mapping rule from the third data sequence to the first data sequence.

**20.** The method according to claim 19, wherein the third data sequence is used to carry bit information.

**21.** A communication apparatus, **characterized by** comprising a memory, a processor, and computer program instructions stored on the memory and runnable on the processor, wherein the processor, when executing the computer program instructions, implements the method according to any one of claims 1 to 20.

**22.** A computer readable storage medium, **characterized in that** the computer readable storage medium comprises computer instructions;

wherein when the computer instructions are executed, the method according to any one of claims 1 to 20 is implemented.

FIG. 1

FIG. 2

S301: A SIGNAL SENDING END DETERMINES A SECOND DATA SEQUENCE ACCORDING TO A FIRST DATA SEQUENCE

FIG. 3

S301: a signal sending end determines a second data sequence according to a first data sequence

S401: perform data padding on K subcarriers based on the second data sequence, to obtain a padded data sequence

S402: perform an N-point IDFT/IFFT operation on the padded data, to obtain time domain data with N sampling points

FIG. 4

$$D_K = [d_0, d_1, d_2, d_3, \ldots, d_{K-1}]$$

$d_0$
$d_1$
$\vdots$
$d_{K-1}$

N-point IDFT/IFFT

Other data

Other data

$$T_N = [t_0, t_1, t_2, t_3, \ldots, t_{N-1}]$$

FIG. 5

S601: a signal sending end determines a fourth data sequence according to a first data sequence

FIG. 6

S601: a signal sending end determines a fourth data sequence according to a first data sequence

S701: perform data padding on K subcarriers based on the fourth data sequence, to obtain a padded data sequence

S702: perform an N-point IDFT/IFFT operation on the padded data sequence, to obtain time domain data with N sampling points

FIG. 7

801
Determining unit

802
Processing unit

Communication apparatus

FIG. 8

90

902                    903

904            Processor        Communication
                               interface

Bus        Memory

901

FIG. 9

## INTERNATIONAL SEARCH REPORT

| International application No. |
| --- |
| **PCT/CN2024/086466** |

### A.    CLASSIFICATION OF SUBJECT MATTER

H04L27/04(2006.01)i

According to International Patent Classification (IPC) or to both national classification and IPC

### B.    FIELDS SEARCHED

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, ENTXTC, ENTXT, CNABS, WPABS, WPABSC, 3GPP, CNKI, IEEE: 序列, 低功率, 低功耗, 唤醒信号, 省电, 变换, 第一, 第二, 傅里叶, 离散, 快速, sequence, lowpower, wakeup, wake-up, LP-WUS, WUS, WUR, first, second, transform, fourier, DFT, IDFT, FFT, IFFT

### C.    DOCUMENTS CONSIDERED TO BE RELEVANT

| Category* | Citation of document, with indication, where appropriate, of the relevant passages | Relevant to claim No. |
| --- | --- | --- |
| X | CN 116073971 A (HUAWEI TECHNOLOGIES CO., LTD.) 05 May 2023 (2023-05-05) claims 1-43, and description, paragraphs [0157]-[0341] | 1-22 |
| X | CN 115883046 A (ZTE CORP.) 31 March 2023 (2023-03-31) claims 1-35, and description, paragraphs [0088]-[0124] | 1-22 |
| X | US 2010118692 A1 (KABUSHIKI KAISHA TOSHIBA) 13 May 2010 (2010-05-13) description, paragraphs [0053]-[0055] | 1-22 |
| X | MODERATOR (NORDIC). "Summary #3 of discussions on L1 signal design and procedure for low power WUS" *3GPP TSG RAN WG1 #112 R1-2302213*, 03 March 2023 (2023-03-03), section 3.1.2 | 1-22 |
| A | WO 2023039766 A1 (HUAWEI TECHNOLOGIES CO., LTD.) 23 March 2023 (2023-03-23) entire document | 1-22 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 July 2024** | **12 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/086466** |

## C.    DOCUMENTS CONSIDERED TO BE RELEVANT

| Category* | Citation of document, with indication, where appropriate, of the relevant passages | Relevant to claim No. |
|---|---|---|
| A | EURECOM. "Discussion on L1 signal design and procedure for low power WUS" *3GPP TSG RAN WG1 Meeting #112 R1-2301133*, 03 March 2023 (2023-03-03), entire document | 1-22 |

Form PCT/ISA/210 (second sheet) (July 2022)

**INTERNATIONAL SEARCH REPORT**
Information on patent family members

International application No.

**PCT/CN2024/086466**

| Patent document cited in search report | | | Publication date (day/month/year) | Patent family member(s) | | | Publication date (day/month/year) |
|---|---|---|---|---|---|---|---|
| CN | 116073971 | A | 05 May 2023 | WO | 2023078358 | A1 | 11 May 2023 |
| CN | 115883046 | A | 31 March 2023 | WO | 2024093402 | A1 | 10 May 2024 |
| US | 2010118692 | A1 | 13 May 2010 | JP | 2010118855 | A | 27 May 2010 |
| WO | 2023039766 | A1 | 23 March 2023 | EP | 4387178 | A1 | 19 June 2024 |
| | | | | CN | 117941327 | A | 26 April 2024 |

Form PCT/ISA/210 (patent family annex) (July 2022)

**REFERENCES CITED IN THE DESCRIPTION**

**Patent documents cited in the description**

*   CN 202310541288